# EUROPEAN PATENT SPECIFICATION

(11) **EP 3 332 475 B1**
(45) Date of publication and mention of the grant of the patent: **01.04.2020**
(21) Application number: 16757047.2
(22) Date of filing: 28.07.2016
(51) Int. Cl.: H02N 2/00, H02N 2/04

(54) **ACTUATOR FOR OPERATING AN ADJUSTING ELEMENT**
STELLANTRIEB ZUR BETÄTIGUNG EINES EINSTELLELEMENTES
ACTIONNEUR DESTINE À FAIRE FONCTIONNER UN ÉLÉMENT DE RÉGLAGE

(30) Priority: 06.08.2015 DE 102015215080
(43) Date of publication of application: 13.06.2018
(73) Proprietor: Johnson Matthey Piezo Products GmbH, 96257 Redwitz an der Rodach (DE)
(72) Inventor: GUNTHER, Jurgen, 96257 Redwitz an der Rodach (DE); KLUMP, Stefan, 96257 Redwitz an der Rodach (DE)
(74) Representative: Scott, Philip McDermott
(86) International application number: PCT/GB2016/052313
(87) International publication number: WO 2017/021700

(56) References cited:
- DE-A1- 3 916 539
- DE-U1-202009 017 868
- US-A1- 2010 038 995

## Description

The invention relates to an actuator for operating an adjusting element comprising an electrically activatable piezoelectric actuator element for exerting a deflecting movement of the actuator element, the actuator element being connected to the adjusting element for transmitting the deflecting movement.

Such actuator elements are used in a wide variety of technical areas, a mechanical movement being triggered with the aid of an electrical control signal. In this case, electrical energy is converted into mechanical energy and so the actuator elements are hence electromechanical actuator elements. The actuator element is responsible here for converting electrical energy into mechanical energy (of motion). Such actuators are used for example in valves, relays, locking mechanisms but also Braille displays. Piezoceramic actuators, in particular so-called bending transducers, are used as the electrically activatable actuator element. These make it possible to obtain a particularly compact construction - for example in comparison with electromagnetic actuators - and are therefore particularly suitable for micro-actuators. In addition, so-called piezo stacks are also frequently used, in particular to achieve great deflections or great forces.

Specifically in the case of Braille displays, such bending actuators are used for suitably activating individual pins of the Braille display. US 2010/0304340 A1 discloses a Braille display comprising an activating unit that has a multiplicity of piezoelectric bending transducers.

More generally, DE 3916539 A1 discloses a device for movement and pressure transmission using an elastomer as the pressure transmission medium. The elastomer is a preformed injection moulded component made of unvulcanised rubber. The mass of rubber transmits forces exerted by actuators and pistons to a position piston. According to the disclosure, the pressure transmission device using an elastomer instead of gas or liquid can operate at high working pressures and higher frequency working strokes whilst keeping reliable sealing properties.

DE 19753754 C1 discloses a piezoelectric actuator having at least one solid state element whose length is varied by applying an electric voltage and a transmission mechanism which amplifies the displacement stroke of the solid state element. The transmission mechanism has two pressure plates whose separation is varied by the solid state element and a zigzag-shaped kinetic chain element running between the plates with one end fixed to the housing and the other end connected to the actuator's output element. The chain element consists of stiff linked and longitudinally displaceable control elements in contact with the inner plate surfaces. DE 20 2009 017 868 U1 discloses an actuating unit for use as e.g. stroke guiding element for transmitting a stroke.

Monomorphous, bimorphous or else multimorphous bending transducers are used as piezoelectric actuators. These are usually restrained at one end thereof, so that when there is an electrical activation the other end performs a deflecting movement, with which the adjusting element is operated directly for exerting a lifting movement. This usually involves a mechanical force transmission at a discrete point at the end of the bending transducer.

In particular in the case of Braille displays, the technical complexity of producing such bending transducers is comparatively high, in particular since automated production is only possible to a certain extent.

Against this background, the invention is based on the object of providing a small electromechanical actuator for activating an adjusting element with which simplified, in particular automated, production is made possible, involving the most efficient possible utilization of energy conversion from electrical energy into mechanical energy.

The object is achieved according to the invention defined in claim 1, i.e. by an actuator for operating an adjusting element which when operated performs an adjusting movement. The actuator comprises a piezoelectric actuator element for exerting a deflecting movement of the actuator element. The actuator element is also connected to the adjusting element for transmitting the deflecting movement. This transmission takes place indirectly with the aid of a transmission element. Provided for the transmission of the deflecting movement is a housing, in which a variable-shape displacer is enclosed. The actuator element is in this case arranged in such a way that its deflecting movement is transmitted to the displacer, so that, on account of its variability in shape, the latter performs a yielding movement. Furthermore, the housing is designed for guiding the displacer in such a way that its yielding movement takes place in such a way that it is directed in an adjusting direction. The displacer is therefore deformed by the deflecting movement of the actuator element, and thereby performs the yielding movement in the adjusting direction. For performing the adjusting movement, finally, the adjusting element is connected to the displacer, so that the yielding movement of the displacer is transmitted to the adjusting element for exerting the adjusting movement.

At least one piezoelectric actuator element, and in particular a bending transducer, is used as the actuator element. Not only monomorphous but also bimorphous or else multimorphous bending transducers may be used here. Used as an alternative to a bending transducer are piezo stacks, in which a multiplicity of individual piezo layers is arranged on one another like a stack.

A piezoelectric material, preferably a so-called PZT ceramic (lead - zirconate - titanium) is used for the piezo elements. Activating electrodes that are connected by way of electrical terminal contacts to control electronics are usually applied to opposite flat sides of the individual layers of this piezoelectric material. The piezoelectric material is in this case usually formed as just a thin layer, and is typically applied to a carrier layer. In the case of a monomorphous configuration, just one piezoelectric layer is applied. In the case of a bimorphous transducer, typically two piezoelectric layers are arranged on the opposite sides of a middle carrier plane, and in the case of a multimorphous construction a multiplicity of piezoelectric layers are formed either on one side or on both sides of the carrier plane. Such piezoelectric actuator elements generally allow a configuration that is of a very small size.

The displacer is a body that consists of a variable-shape displacer mass or comprises such a mass, for example in that this displacer mass is enclosed in a flexible casing. The displacer is then formed by the casing with the displacer mass contained therein. An essential feature of the displacer is its reversible variability in shape, so that the deflecting movement can be transmitted to the adjusting element by the change in shape brought about as a result. After completion of the activation (deflection) of the actuator element, the displacer reverts to its original form, which is predetermined by the housing. To this extent, the housing defines in a certain way a guide for the displacer and predetermines the direction of the yielding movement.

Of particular importance in the case of the actuator described here is the transmission of the mechanical deflecting movement of the actuator element by means of the displacer to the adjusting element. There is therefore no direct force transmission between the actuator element and the adjusting element. The configuration with the housing and the displacer enclosed therein and also with the displaceably mounted adjusting element can be produced overall at low cost, and in particular also in an automated manner, so that simplified production of such actuators is made possible.

Furthermore, the actuator element particularly acts on the displacer over a large area, so that instead of loading at a discrete point, as is the case with conventional actuators, now on the one hand a uniform loading of the actuator element is achieved, with the advantage that the actuator element of the invention is rendered more durable. On the other hand, a transmission of the deflecting movement over as large an area as possible takes place as a result, so that an efficient conversion of the mechanical deflecting movement of the actuator element takes place, and consequently a very efficient utilization of the electrical energy used. This also leads in particular to the effect that particularly small actuator elements can be used, so that overall the actuator can also be formed in a small size.

The displacer is preferably elastic (as a verb) or plastic (as a verb) and is in particular formed as a solid body. With preference, it is in this case formed as a (solid) body of plastic. For example, the displacer in particular can be an elastic body made of plastic. Therefore, a deformable solid material is generally used as the material for the displacer, in particular an elastomeric material, with preference an elastomeric plastic. When elastic material is used, after activation the displacer therefore automatically reverts to its original state on account of its elasticity. If only a plastically deformable material is used, the displacer reverts to the original state as a consequence of an external force acting on it.

Preferably, a silicone or a polyurethane material is used for the displacer. In addition, further plastics or else other materials, in particular elastic materials, such as for example rubber, that display comparable elastic characteristics may be used. Such materials, specifically silicone, are suitable in particular for their durability, since they are suitable for frequent reversible yielding and reversion to their original state without any structural changing of the material taking place. A long working lifetime is achieved as a result.

As an alternative to the use of a solid body for the displacer, a liquid, in particular a viscous liquid, can be used, the viscosity of which is preferably greater than or equal to 10⁴ mPas, which corresponds approximately to the viscosity of honey. As an alternative to this, a low-viscosity liquid can be used. This viscous mass then forms the displacer or - in particular in the case of a low-viscosity liquid, for example having a viscosity similar to water - is preferably enclosed in a flexible casing and with it forms the displacer. The displacer is in this case formed for example in the manner of a cushion, in particular a cushion filled with a gel-like mass. When viscous masses are used, the displacer reverts to the original state in particular as a result of gravitational force.

Preferably, the displacer - in particular in the configurational variant with an elastic/plastic material - has a Shore A hardness according to DIN EN ISO 868 and DIN ISO 7619-1 in the range of 30-50. This allows a desired yielding movement of the displacer under the typical deflecting forces and adjusting displacements of a bending transducer. When gel-like liquids are used, for example, the values also lie below these figures.

The displacer is generally enclosed in the housing, that is to say the displacer lies against the wall of the housing or against the actuator element on all sides. A yielding of the displacer within the housing is only made possible in the adjusting direction. The housing offers a yielding or guiding space for the displacer in the adjusting direction. In the adjusting direction, the displacer in this case expediently adjoins the adjusting element directly.

It is particularly advantageously achieved by this construction that a compression, that is to say a volume reduction, also partially takes place as a consequence of the displacement of the displacer by the actuator element. The displacer is therefore preferably compressible. As a result, the displacer has a greater hardness in the deflected state of the actuator element than in the non-deflected state. This has the effect that, in the deflected state, a defined adjusting and holding force is exerted on the adjusting element by way of the displacer. This force is then transmitted further from said adjusting element. In particular in the case of an application for a Braille element, the adjusting and holding force lies in the range of 1-8 N. In the case of other applications, for example in the case of valves, the force may also be higher, and is for example a few 10 N.

As an alternative to the use of a compressible displacer, a non-compressible displacer can be used, with which therefore the volume remains constant and the volume that is displaced by the actuator element is deflected 1:1 into a yielding movement in the adjusting direction.

In a preferred configuration, the at least one actuator element is arranged within the housing. The actuator element is therefore arranged in the housing together with the displacer. The displacer in this case lies in particular in full surface-area contact against the actuator element. Preferably, the actuator element acts directly on the displacer. As an alternative to this direct contact between the displacer and the actuator element, an elastic wall may also be arranged between these two elements. Integration of the actuator element in the interior space of the housing has the effect of achieving efficient utilization of the deflecting movement of the actuator element. In principle, the actuator element could also be arranged outside the housing, as long as the latter has an elastic wall in the region of the actuator element.

In a preferred development, the actuator element is in this case arranged between a wall of the housing and the displacer. The actuator element therefore forms for the displacer as it were a movable wall region of the housing and deforms it from the outside in the direction of the centre.

As an alternative to this, at least a partial region of the wall of the housing itself can be formed from a piezoelectric material. With preference, a so-called piezo tube with electrodes attached to it is provided for forming the actuator element, the piezo tube forming the housing or at least part of the same. In the case of this variant, the electrodes are attached in particular on an inner side and on an outer side of the housing. They are in this case applied to the inner side or the outer side for example partially, in particular in strip form, or else over the full surface area. When there is an activation, the piezo tube, and with it the housing overall, contracts or expands, so that the resultant change in volume therefore leads to the desired displacement of the displacer.

The actuator element is preferably also oriented in such a way that the direction of its deflecting movement is different from the adjusting direction, and in particular is oriented perpendicularly thereto. Specifically, the actuator element, formed for example as a bending transducer, extends in the adjusting direction, which is defined in particular by a longitudinal direction of the housing. The deflecting movement consequently takes place substantially perpendicularly in relation to the longitudinal direction. Virtually any desired deflection of the directed deflecting movement of the piezoelectric actuator element is generally made possible in an easy way by the displacer. This is of advantage for the desired configuration of a small size.

In an expedient development, at least two actuator elements are arranged, arranged in particular lying opposite one another on opposite inner walls of the housing. As a result, the effect is multiplied without complex measures having to be provided. In principle, more than two actuator elements may also be arranged. These are preferably respectively arranged on an inner wall of the housing. An opposing arrangement is not absolutely necessary, since the direction of the deflecting movement of the actuator elements is immaterial on account of the variable-shape displacer.

Overall, the actuator is expediently a micro-actuator, in order to be able to realize applications of as small a size as possible. In order to achieve this, at least in the original state with the actuator element not deflected, the displacer takes up a volume in the range of 10 mm³ to 250 mm³, and in particular in the range of 20 mm³ to 50 mm³. With preference, the housing has in this case a (free inner) base area in the range of 2-10 mm² and a height of 5-10 mm². Correspondingly, the housing has a size corresponding to this. When piezo tubes are used, they have for example an inside diameter of approximately 1.5-2 mm. The wall thickness in the case of such piezo tubes is usually approximately in the range of 0.5-0.6 mm.

The actuator as a whole is expediently designed for an adjusting displacement of the adjusting element of at most a few millimetres and in particular for an adjusting displacement of less than or equal to 1 mm. The yielding movement of the displacer is therefore converted into a small adjusting displacement movement of approximately 1 mm in the adjusting direction.

The housing is formed as a tubular hollow body extending in one direction, in particular in the adjusting direction. The housing in this case has preferably, but not necessarily, a solid wall. The cross-sectional area perpendicularly to the longitudinal direction of the hollow body is in this case expediently polygonal, in particular rectangular and specifically square. Alternatively, it is circular. The adjusting element is expediently arranged on the one end face of the tubular housing. The end face of the tube that is opposite from the adjusting element is preferably closed.

With preference, the adjusting element has a guiding element, which is guided in or on the housing. With preference, it is guided in the housing and is formed in the manner of a piston with a cross-sectional shape adapted to the hollow body. This adapted cross-sectional shape has the effect here that a sealing is at the same time also expediently achieved by the guiding element, so that as it were the receiving space for the displacer that is formed by the housing is closed at the one end face by the guiding element. In this configuration, the adjusting element is formed overall as a separate element, in particular of plastic, and is preferably only loosely connected to the displacer, without a non-positive or positive connection.

As an alternative to this, the adjusting element can be firmly connected to the displacer, for example by adhesive bonding, and can be in particular the adjusting element can be part of the displacer. The adjusting element and the displacer are therefore a one-piece component.

The housing has at the end face opposite from the adjusting element an end face closed by a terminating element. This terminating element also has in this case electrical terminal contacts, by way of which electrical contact of the actuator element takes place. The terminating element therefore forms in particular a carrier of an insulating material, in particular plastic, in which electrical components are possibly formed. This allows easy mounting, since the contacting, that is to say the electrical supply and/or electrical activation, of the actuator element takes place in an easy way, by way (exclusively) of the terminating element. During mounting, a simple tube that is open on both sides, one side of which is closed by the terminating element and the other side of which is closed by the adjusting element, can therefore be used for the housing.

The terminating element is expediently formed with the actuator element as a prefabricated module, which need only be inserted into the housing. The at least one actuator element is in this case fastened to the terminating element and contact made by a fixing end. The actuator element is therefore fastened directly to the terminating element, in particular as a (bending transducer) element projecting vertically (in the adjusting or longitudinal direction of the housing).

As an alternative to this, the actuator element is first fastened in the housing by its fixing end and then the electrical contacting takes place, in particular automatically, during the mounting of the terminating element, for example by suitable spring contacts.

In a particularly preferred configuration, the terminating element is formed as a circuit board, or at least has such a circuit board, control electronics for the activation of the actuator element being arranged on the circuit board. The control electronics in this case preferably have inputs for receiving control signals and are designed for converting these control signals in a suitable way for the activation of the actuator element. With preference, the control electronics also have external terminals for supplying power to the circuit board. Overall, automated production is made possible by this configuration in a particularly expedient way, since the individual components are provided as prefabricated modules and just have to be joined together in an easy way.

In a particularly preferred configuration, the adjusting element is a pin of a Braille display. A multiplicity of such actuators are therefore joined together within a suitable Braille housing to form the Braille display.

As an alternative to this, the adjusting element is an adjusting element of a valve. The adjusting movement of the adjusting element therefore leads to an operation of the valve, therefore controls a flow cross section of the valve.

In a further alternative, the adjusting element is part of an electrical switching element. The adjusting element in this case acts as an operator for switching contacts. In a further alternative, the adjusting element is expediently part of a locking mechanism. Specifically, the adjusting element is in this case formed as a locking pin or acts directly on such a locking pin.

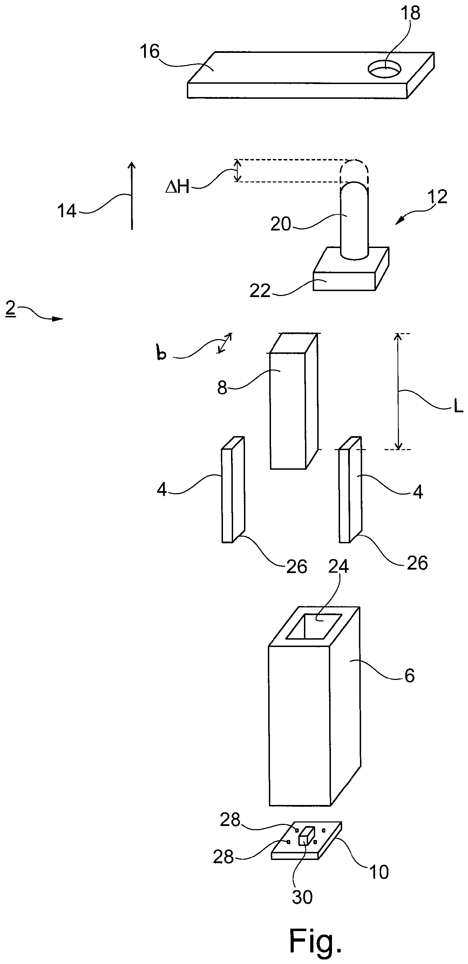

An exemplary embodiment of the invention is explained in more detail below on the basis of the single figure. This shows a micro-actuator for a Braille display in the manner of an exploded representation.

The micro-actuator 2 represented in the figure has at least one piezoelectric actuator element 4, in the exemplary embodiment two piezoelectric actuator elements 4, which in the mounted state are arranged together with a displacer 8 in the interior of a housing 6. In the exemplary embodiment, the housing 6 is formed as a tube with a square cross section. The one end face of the housing 6 is closed by a terminating element 10. Arranged at the opposite end of the tubular housing 6 is an adjusting element 12, which in the exemplary embodiment is mounted in the housing 4 displaceably in the longitudinal direction of the same. This longitudinal direction at the same time defines an adjusting direction 14.

Apart from these components of the actuator 2, a guiding plate 16 with a guiding hole 18 is also represented in the figure.

In a way corresponding to the use for a Braille display, the adjusting element 12 has a sensing pin 20, which in the assembled state extends through the guiding hole 18. The sensing pin 20 is in this case connected at its foot to a guiding element 22.

In particular, the adjusting element 12 is formed as a one-piece component, in particular of plastic. With the aid of the guiding element 22, the adjusting element 12 is guided within the housing 6. The guiding element 22 is formed here with a cross-sectional contour that is adapted to the inner cross-sectional contour of the housing 6. In the exemplary embodiment, this is a square cross-sectional contour. The guiding element 22 is formed in the manner of a rectangular plate. Apart from the necessary tolerance play, the cross-sectional area of the guiding element 22 is identical to the free inner cross-sectional area of the housing 6.

During operation, the adjusting element 12 can be offset in the adjusting direction 14 by an adjusting displacement ΔH. This adjusting displacement ΔH in this case lies in the lower millimetre range, preferably < 2 mm and in particular at approximately 1 mm. This adjusting displacement is sufficient for the function of a Braille display. The adjusting displacement ΔH is therefore dimensioned sufficiently to enable a person to feel from the plurality of such sensing pins 20 arranged in a Braille display the respective position (raised or retracted position).

The overall length of the adjusting element 12 in the adjusting direction 14 is only altogether a few millimetres, for example in the range between 4 mm and 10 mm.

In the exemplary embodiment, the displacer 8 is a full solid body of a suitable elastic plastics material. A silicone or else a polyurethane is used here in particular as the plastics material. The plastics material used is here has a Shore A hardness in the range between 30 and 50.

In the mounted state, the two piezoelectric actuator elements 4 are arranged on opposite regions of the wall 24 of the housing 6. The actuator elements 4 are in this case respectively formed as bending transducers, which extend in the adjusting direction 14 as elongated elements in the form of platelets. At their rear end, remote from the adjusting element 12, they respectively have a fixing end 26, by which they are connected to the terminating element 10. In particular, they are also electrically contacted by their fixing end 26 with respect to the terminating element 10. For this purpose, the terminating element 10 has corresponding terminal contacts 28.

The actuator elements 4 are for example monomorphous bending transducers or else alternatively bimorphous, trimorphous or else multimorphous bending transducers. These typically have a thickness just in the range of a few 100 µm. When a suitable control voltage is applied during operation, a bending of the actuator elements 4 takes place, so that they respectively perform a deflecting movement. This is oriented in the direction of the centre of the housing 6, that is to say substantially perpendicularly in relation to the adjusting direction 14.

The length of the actuator elements 4 corresponds in this case at least approximately to the length of the displacer 8. The actuator elements 4 therefore lie, in particular directly, with their flat side that is facing the displacer 8 against the displacer 8 in full surface-area contact over their entire length.

In the exemplary embodiment, the displacer 8 has in the adjusting direction 14 a length l in the range for example of 5 mm to 8 mm. It also has a width b in the range of 2 mm. The edge length of the square base area is therefore approximately 2 mm.

The dimensions of the displacer 8, the actuator elements 4 and also the housing 6 are in this case made to match one another overall in such a way that in the mounted state the actuator elements 4 lie with their one flat side directly against the wall 24 and lie with their other, opposite flat side against the displacer 8. A deflecting movement of the actuator elements 4 is therefore transmitted to the displacer 8 directly, without any backlash.

The tubular housing is preferably a plastic housing. This has in the adjusting direction 14 a length which is approximately greater than the length of the displacer 8. This overlength lies for example in the range between 2 mm and 4 mm. On the one hand, this overlength serves for receiving and guiding the guiding element 22 of the adjusting element 12 and on the other hand serves for providing a yielding volume for the displacer 8.

Finally, in a preferred configuration, the terminating element 10 is formed by a circuit board, or a circuit board is also integrated in the terminating element 10. In addition to the terminal contacts already mentioned, control electronics 30 are arranged on this circuit board. The elements of the control electronics 30 are optionally attached on the side facing the inner side of the housing or else alternatively are attached on the outer side of the terminating element 10.

The terminating element 10 additionally has external terminals, by way of which control signals and/or a supply voltage for the actuator elements 4 can be received.

During operation, an activation of the actuator elements 4 takes place by way of the terminal contacts 28. When there is an activation of the actuator elements 4, they are deflected in a way corresponding to their construction as bending transducers at their free end, respectively being bent inwardly against the displacer 8 over their entire length from the fixing end 26. As a result, a compression of the displacer 8 takes place in the region of the actuator elements 4. On account of the elastic choice of material, overall the displacer 8 is variable in shape. The displacement of the plastics material by the actuator elements 4 therefore leads as it were to a material displacement and a yielding movement of the displacer 8. As a consequence of the housing 6, only a defined direction, that is to say the adjusting direction 14, is predetermined for this yielding movement of the displacer 8. The displacer therefore changes its length in the adjusting direction 14. This change in length is transmitted directly to the adjusting element 12, which lies directly on the displacer 8. This leads to the desired adjusting movement of the adjusting element 12 in the adjusting direction 14.

When the actuator elements 4 return, they revert to their starting position, in which they lie flat against the wall 24. On account of the elastic property, the displacer 8 also reverts to the original state, that is to say shortens its length. The adjusting element 12 then automatically moves back again into the retracted position. This takes place for example automatically on account of gravitational force. As an alternative to this, the guiding element 22 is connected to the displacer 8, so that the adjusting element 12 is actively moved back by the displacer 8 into the retracted starting position again. For this purpose, the adjusting element 12 is for example adhesively bonded to the front end face of the displacer 8.

In the case of a Braille display, a multiplicity of such micro-actuators 2 are arranged next to one another in rows and columns.

Apart from the application described here in a Braille display, the actuator 2 here can also be used in further technical areas of application. On the one hand, the actuator 2 is for example used in a valve, the adjusting element 12 then being an adjusting element of the valve for opening and closing a flow path for a fluid. In a further application, the actuator 2 is used in the case of an electrical switching element. In this case, the adjusting element 12 is part of a switching element and operates for example a switching contact. Finally, use of the actuator 2 in a locking mechanism is also envisaged. In this case, the adjusting element 12 is formed as a locking element or acts on a locking element.

The advantages of this actuator can be seen on the one hand in a configuration of a very small size. Furthermore, the lying of the bending transducers in full surface-area contact against the displacer has the effect that the bending transducers are subjected to very uniform loading, whereby a long lifetime is ensured. The construction described here can also be produced comparatively easily in an automated manner, so that only low production costs are incurred.

### List of designations

- 2: Actuator
- 4: Actuator element
- 6: Housing
- 8: Displacer
- 10: Terminating element
- 12: Adjusting element
- 14: Adjusting direction
- 16: Guiding plate
- 18: Guiding hole
- 20: Sensing pin
- 22: Guiding element
- 24: Wall
- 26: Fixing end
- 28: Terminal contacts
- 30: Control electronics
- ΔH: Adjusting displacement
- l: Length
- b: Width

## Claims

1. Actuator (2) for operating an adjusting element (12), which when operated performs an adjusting movement, which actuator comprising at least one electrically activatable piezoelectric actuator element for exerting a deflecting movement of the actuator element (4), the actuator element (4) being connected to the adjusting element (12) for transmitting the deflecting movement, **characterized by** a housing (6) with a variable-shape displacer (8) enclosed therein for transmitting the deflecting movement, wherein the actuator element (4) is arranged in such a way that during operation the deflecting movement is transmitted to the displacer (8), so that, as a result of a deformation, the displacer performs a yielding movement, wherein the housing (6) is formed as a guide for the displacer (8) in such a way that the yielding movement of the displacer (8) in the housing (6) is directed in a defined adjusting direction (14), and wherein the adjusting element (12) is in operative connection with the displacer (8) in such a way that the yielding movement of the displacer (8) is transmitted to the adjusting element (12) for exerting the adjusting movement in the adjusting direction (14), **characterized, in that** the housing is formed as a tubular hollow body extending in the adjusting direction in which the end face of the tube that is opposite from the adjusting element is closed by a terminating element (10), the terminating element being connected to an actuator element by way of electrical terminal contacts (28).

2. An actuator (2) according to claim 1, wherein the displacer (8) is plastic or elastic.

3. An actuator (2) according to claim 1 or 2, wherein both the actuator element (4) and the displacer are disposed within the housing (6).

4. An actuator (2) according to claim 1 or 2, wherein at least some of the housing (6) is formed from a piezoelectric material.

5. An actuator according to claim 4, wherein the actuator element (4) is oriented in such a way that the direction of its deflecting movement is different from the adjusting direction (14).

6. An actuator according to claim 5, wherein the direction of the deflecting movement of the actuator element is perpendicular to the adjusting direction (14).

7. An actuator (2) according to any preceding claim wherein the adjusting element has an adjusting displacement (ΔH) of less than or equal to 1 mm.

8. An actuator (2) according to any preceding claim, wherein the adjusting element (12) has a guiding element (22), which is guided in or on the housing (6).

9. An actuator (2) according to claim 8, wherein the guiding element (22) is guided like a piston in the interior of the housing (6).

10. An actuator (2) according to any preceding claim, wherein the guiding element (22) is directly in contact with the displacer (8) and seals off the hollow body.

11. An actuator (2) according to any preceding claim, wherein the actuator element (4) is fastened to the terminating element (10) by a fixing end.

12. An actuator (2) according to the preceding claim, wherein the terminating element (10) has a circuit board or is formed from a circuit board, on which circuit board are arranged control electronics (30) for the activation of the actuator element (4).

13. An actuator (2) according to any preceding claim, wherein that the adjusting element (12) is a pin of a Braille display, an adjusting element of a valve, part of an electrical switching element or part of a locking mechanism.

## Patentansprüche

1. Stellantrieb (2) zur Betätigung eines Einstellelements (12), das bei Betätigung eine Verstellbewegung ausführt, wobei der Stellantrieb mindestens ein elektrisch aktivierbares piezoelektrisches Stellantriebelement zur Ausübung einer Auslenkbewegung des Stellantriebelements (4) aufweist, wobei das Stellantriebelement (4) zur Übertragung der Auslenkbewegung mit dem Einstellelement (12) verbunden ist, **gekennzeichnet durch** ein Gehäuse (6) mit einem darin eingeschlossenen, formvariablen Verdrängerteil (8) zur Übertragung der Auslenkbewegung, wobei das Betätigungselement (4) so angeordnet ist, dass während der Betätigung die Auslenkbewegung auf das Verdrängerteil (8) übertragen wird, so dass das Verdrängerteil infolge einer Verformung eine Ausweichbewegung ausführt, wobei das Gehäuse (6) als Führung für das Verdrängerteil (8) derart ausgebildet ist, dass die Ausweichbewegung des Verdrängerteils (8) im Gehäuse (6) in eine definierte Verstellrichtung (14) gerichtet ist, und wobei das Einstellelement (12) mit dem Verdrängerteil (8) derart in Wirkverbindung steht, dass die Ausweichbewegung des Verdrängerteils (8) auf das Einstellelement (12) zur Ausübung der Verstellbewegung in der Verstellrichtung (14) übertragen wird, **dadurch** gekennzeichnet, dass das Gehäuse als ein sich in Verstellrichtung erstreckender, rohrförmiger Hohlkörper ausgebildet ist, bei dem die zum Einstellelement entgegengesetzte Stirnseite des Rohres **durch** ein Abschlusselement (10) verschlossen ist, wobei das Abschlusselement über elektrische Anschlusskontakte (28) mit einem Betätigungselement verbunden ist.

2. Stellantrieb (2) gemäß Anspruch 1, wobei das Verdrängerteil (8) plastisch oder elastisch ist.

3. Stellantrieb (2) gemäß Anspruch 1 oder 2, wobei sowohl das Stellantriebelement (4) als auch das Verdrängerteil innerhalb des Gehäuses (6) angeordnet sind.

4. Stellantrieb (2) gemäß Anspruch 1 oder 2, wobei zumindest ein Teil des Gehäuses (6) aus einem piezoelektrischen Material gebildet ist.

5. Stellantrieb gemäß Anspruch 4, wobei das Stellantriebelement (4) so ausgerichtet ist, dass die Richtung seiner Auslenkbewegung von der Verstellrichtung (14) verschieden ist.

6. Stellantrieb gemäß Anspruch 5, wobei die Richtung der Auslenkbewegung des Stellantriebelements senkrecht zur Verstellrichtung (14) ist.

7. Stellantrieb (2) gemäß einem der vorstehenden Ansprüche, wobei das Einstellelement eine Einstellverschiebung (ΔH) von weniger als oder gleich 1 mm aufweist.

8. Stellantrieb (2) gemäß einem der vorhergehenden Ansprüche, wobei das Einstellelement (12) ein Führungselement (22) aufweist, das in oder an dem Gehäuse (6) geführt ist.

9. Stellantrieb (2) gemäß Anspruch 8, wobei das Führungselement (22) wie ein Kolben im Inneren des Gehäuses (6) geführt ist.

10. Stellantrieb (2) gemäß einem der vorhergehenden Ansprüche, wobei das Führungselement (22) direkt in Kontakt mit dem Verdrängerteil (8) ist und den Hohlkörper abdichtet.

11. Stellantrieb (2) gemäß einem der vorhergehenden Ansprüche, wobei das Stellantriebelement (4) mit einem Befestigungsende an dem Abschlusselement (10) befestigt ist

12. Stellantrieb (2) gemäß dem vorhergehenden Anspruch, wobei das Abschlusselement (10) eine Leiterplatte aufweist oder aus einer Leiterplatte gebildet ist, auf der eine Steuerelektronik (30) zur Aktivierung des Stellantriebelements (4) angeordnet ist.

13. Stellantrieb (2) gemäß einem der vorhergehenden Ansprüche, wobei das Einstellelement (12) ein Stift einer Brailleanzeige, ein Einstellelement eines Ventils, Teil eines elektrischen Schaltelements oder Teil eines Verriegelungsmechanismus ist.

## Revendications

1. Actionneur (2) destiné à faire fonctionner un élément de réglage (12), qui, lorsqu'il fonctionne, effectue un mouvement de réglage, lequel actionneur comprenant au moins un élément d'actionneur piézoélectrique pouvant être activé électriquement pour exercer un mouvement de déviation de l'élément d'actionneur (4), l'élément d'actionneur (4) étant relié à l'élément de réglage (12) pour transmettre le mouvement de déviation, **caractérisé par** un boîtier (6) avec un piston auxiliaire à forme variable (8) enfermé dans celui-ci pour transmettre le mouvement de déviation, dans lequel l'élément d'actionneur (4) est agencé de manière à ce que, pendant le fonctionnement, le mouvement de déviation soit transmis au piston auxiliaire (8), de sorte que, suite à une déformation, le piston auxiliaire effectue un mouvement élastique, dans lequel le boîtier (6) est formé en tant que guide pour le piston auxiliaire (8) de manière à ce que le mouvement élastique du piston auxiliaire (8) dans le boîtier (6) soit dirigé dans une direction de réglage définie (14), et dans lequel l'élément de réglage (12) est en liaison fonctionnelle avec le piston auxiliaire (8) de manière à ce que le mouvement élastique du piston auxiliaire (8) soit transmis à l'élément de réglage (12) pour exercer le mouvement de réglage dans la direction de réglage (14), **caractérisé en ce que** le boîtier se présente sous la forme d'un corps creux tubulaire s'étendant dans la direction de réglage dans laquelle la face d'extrémité du tube qui est opposée à l'élément de réglage est fermée par un élément de terminaison (10), l'élément de terminaison étant relié à un élément d'actionneur par l'intermédiaire de contacts de borne électriques (28).

2. Actionneur (2) selon la revendication 1, dans lequel le piston auxiliaire (8) est en plastique ou élastique.

3. Actionneur (2) selon la revendication 1 ou 2, dans lequel l'élément d'actionneur (4) et le piston auxiliaire sont tous deux disposés dans le boîtier (6).

4. Actionneur (2) selon la revendication 1 ou 2, dans lequel au moins une partie du boîtier (6) est formée à partir d'un matériau piézoélectrique.

5. Actionneur selon la revendication 4, dans lequel l'élément d'actionneur (4) est orienté de manière à ce que la direction de son mouvement de déviation soit différente de la direction de réglage (14).

6. Actionneur selon la revendication 5, dans lequel la direction du mouvement de déviation de l'élément d'actionneur est perpendiculaire à la direction de réglage (14).

7. Actionneur (2) selon l'une des revendications précédentes, dans lequel l'élément de réglage a un déplacement de réglage (ΔH) inférieur ou égal à 1 mm.

8. Actionneur (2) selon l'une des revendications précédentes, dans lequel l'élément de réglage (12) a un élément de guidage (22), qui est guidé dans ou sur le boîtier (6).

9. Actionneur (2) selon la revendication 8, dans lequel l'élément de guidage (22) est guidé comme un piston à l'intérieur du boîtier (6).

10. Actionneur (2) selon l'une des revendications précédentes, dans lequel l'élément de guidage (22) est directement en contact avec le piston auxiliaire (8) et scelle le corps creux.

11. Actionneur (2) selon l'une des revendications précédentes, dans lequel l'élément d'actionneur (4) est fixé à l'élément de terminaison (10) par une extrémité de fixation.

12. Actionneur (2) selon la revendication précédente, dans lequel l'élément de terminaison (10) a une carte de circuit imprimé ou est formé à partir d'une carte de circuit imprimé, sur laquelle carte de circuit imprimé sont agencés des éléments électroniques de commande (30) pour l'activation de l'élément d'actionneur (4).

13. Actionneur (2) selon l'une des revendications précédentes, dans lequel l'élément de réglage (12) est une broche d'un dispositif d'affichage en Braille, un élément de réglage d'une soupape, une partie d'un élément de commutation électrique ou une partie d'un mécanisme de verrouillage.
